# EUROPÄISCHE PATENTANMELDUNG

(11) **EP 1 116 786 A1**
(43) Veröffentlichungstag der Anmeldung: **18.07.2001**
(21) Anmeldenummer: 00100757.4
(22) Anmeldetag: 14.01.2000
(51) Int. Cl.: C11D 3/32

(54) **Verwendung von N-Methyl-2-pyrrolidon als Lösungsmittel eines Klebstoffs und Verwendung von N-Methyl-2-pyrrolidon zur Reinigung, insbesondere zur Entfettung einer Polymethylmethacrylatoberfläche**

(71) Anmelder: Erdle, Josef, 69436 Schönbrunn (DE)
(72) Erfinder: Reinecke, Horst, 68723 Schwetzingen (DE); Lange, Frank, 68161 Mannheim (DE)
(74) Vertreter: Schurack, Eduard F.

(57) **Zusammenfassung**

Die Erfindung betrifft die Verwendung von N-Methyl-2-pyrrolidon als Lösungsmittel eines Klebstoffs. Die Erfindung betrifft auch die Verwendung von N-Methyl-2-pyrrolidon zur Reinigung, insbesondere zur Entfettung, einer Polymethylmethacrylatoberfläche. Die Erfindung betrifft auch ein Klebeset, das einen ersten verschließbaren Behälter aufweist, der einen Klebstoff enthält, und das einen zweiten verschließbaren Behälter aufweist, der N-Methyl-2-pyrrolidon enthält.

## Beschreibung

Die Erfindung betrifft die Verwendung von N-Methyl-2-pyrrolidon als Lösungsmittel eines Klebstoffs und die Verwendung von N-Methyl-2-pyrrolidon zur Reinigung, insbesondere zur Entfettung einer Polymethylmethacrylatoberfläche.

Unter Klebstoffen versteht man nicht-metallische Werkstoffe, die Körper durch Oberflächenhaftung (Adhäsion) und innere Festigkeit (Kohäsion) verbinden können. Die Klebstoffe bestehen aus Grundstoffen, meist natürlichen oder synthetischen organischen Polymeren, mit Zusätzen von Lösungsmitteln, Weichmachern, Füllstoffen, Streckmitteln, Härtern oder anderen, die Klebeeigenschaften oder das Abbinden beeinflussenden Stoffen. Zu den Grundstoffen gehören beispielsweise wasserlösliche natürliche oder synthetische Polymere, Naturkautschuk und synthetische Kautschuktypen wie Polychlorbutadien, thermoplastische Hochpolymere wie Nitrocellulose, Polyvinylazetat, Polyacryl- und Polymethacrylsäureester, Vinylchloridmischpolymere und nachchlorisiertes Polyvinylchlorid, Polyvinyläther und Polyvinylazetale. Weitere Grundstoffe stellen synthetische, meist härtbare Harze (Phenol- und Karbamin-Formaldehydharze, Epoxidharze, ungesättigte Polyesterharze, Polyurethane, Polysulfide, Silikone), Naturharze, Wachse und bituminöse Massen und anorganische Grundstoffe dar.

Zu unterscheiden sind sogenannte physikalisch abbindende Klebstoffe und Reaktionsklebstoffe.

Als physikalisch abbindend werden einkomponentige Klebstoffe bezeichnet, die Lösungsmittel auf der Basis von organischen Chemikalien (Alkohole, Ester, Ketone oder Aromaten) oder Wasser enthalten. Die den eigentlichen Klebevorgang auslösenden Grundstoffe sind also in Lösungsmitteln gelöst, so daß die klebenden Grundstoffe als flüssige oder pastöse Masse verarbeitungsfähig sind. Der Klebevorgang wird beispielsweise durch Verdunstung der Lösungsmittel ausgelöst. Man unterscheidet Schmelzklebstoffe, Heißsiegelklebstoffe, Kontaktklebstoffe, Haftklebstoffe und Alleskleber. Die Schmelzklebstoffe werden heiß als Schmelze aufgetragen und bilden beim Erstarren die Klebverbindung. Verwendet werden u.a. Mischungen von Äthylen-Vinylazetat-Copolymeren mit Harzen und Wachsen. Die sogenannten Heißsiegelklebstoffe werden als Lösung oder Dispersionen aufgetragen. Die getrockneten Schichten schmelzen bei der Siegelung in der Wärme und bilden die Klebverbindung. Die sogenannten Kontaktkleber müssen auf beide zu verklebende Oberflächen aufgetragen werden, und nach einer Vortrocknung erfolgt die Klebung durch kurzzeitiges, starkes Zusammendrücken. Hierfür werden beispielsweise Lösungen von Synthesekautschuk und Harzen verwendet. Unter Haftklebstoffen sind Dauerklebstoffe zu verstehen, die meist auf Kautschuk basieren und unter geringem Druck haften. Alleskleber sind u.a. Lösungen von Nitrozellulose, Polyvinylazetat in Estern und Ketonen, die durch Verdunstung des Lösungsmittels abbinden.

Zu den Reaktionsklebstoffen gehören die Cyanacrylatklebstoffe, auch Sekundenkleber genannt, und Zweikomponentenkleber, bestehend aus Bindern (Harze) und Härtern, die getrennt aufbewahrt werden. Die Harze können ungesättigte Polyesterharze, Vinyl- und Acrylverbindungen, Epoxid- und Polyurethanverbindungen und die Härter Peroxide der Harzkomponenten Benzoylperoxid, Polyamine oder Polyisocyanate sein, chemisch sehr aktive Verbindungen, die erst durch die Vermischung und Abbindung zu Polymeren vernetzen und somit den Klebevorgang vollziehen. Diese bilden dann einen hochwirksamen Kleber, der hohen Belastungen standhält.

Sekundenklebstoffe sind Einkomponentenprodukte auf der Basis von Cyanacrlyaten. Man setzt dabei Methyl-, Ethyl- und Butylester der Cyanacrylsäure unter Zugabe von Weichmachern ein. Die Cyanacrylatklebstoffe härten sofort nach dem Auftragen mit Hilfe der Luftfeuchtigkeit aus. Der Cyanacrylatklebstoff ist heute einer der weitest verbreiteten Kleberarten im Privathaushalt und in der Industrie. Cyanacrylatklebstoff wird unter anderem sogar in der Zahntechnik verwendet. Seine hohe Klebekraft, die er in kürzester Zeit gewährleistet, hat ihn zu einem der beliebtesten Kleber seiner Zeit gemacht. Durch seine enorme Klebekraft besitzt er allgemein den Ruf, sehr fest und vor allem unlöslich zu sein.

Nicht gelungene Verklebungen führen jedoch oft auch zum Verlust der zu verklebenden Teile, da sich der polymere Cyanacrylatklebstoff nicht mit den üblicherweise in einem Haushalt vorhandenen Lösungsmitteln ablösen läßt. Besonders mit dem Cyanacrylatklebstoff kontaminierte Hautoberflächen stellen ein ernst zu nehmendes Problem dar. In vielen Fällen müssen verklebte Hautteile sogar chirurgisch getrennt werden. Bisher ist kein geeignetes Lösungsmittel bekannt, das den Cyanacrylatkleber vor allem von empfindlichen Werkstoffen, wie z.B. Plexiglas, schonend ablösen könnte. Polymere Rückstande wurden bisher abgeschliffen oder mit dem der Allgemeinheit schwer zugänglichen und für empfindliche Werkstoffe ungeeignetem Lösungsmittel Aceton (Dimethylketon) entfernt. Aceton ist als Drogenhilfsmittel bekannt und daher der breiten Masse von Anwendern nicht zugänglich. Auch aufgrund seines hohen Dampfdrucks und seiner Brennbarkeit stellt das Aceton ein Gefahrengut bei Lagerung, Abfüllung und Transport dar. Weiterhin nachteilig ist, daß der hohe Dampfdruck des Acetons zu einem sehr hohen Verbrauch beim Lösevorgang führt. Von überaus großem Nachteil ist auch, daß nur eine beschränkte Anzahl von Materialien gegenüber Aceton beständig ist. Zur Entfernung von Klebstoff von Textilien oder beispielsweise Plexiglas ist Aceton ungeeignet. Plexiglas, auch Acrylglas oder Polymethylmethacrylat genannt, ist ein äußerst beliebter Werkstoff, der überaus häufig in den unterschiedlichsten Bereichen eingesetzt wird. Es handelt sich hierbei jedoch, wie bereits erwähnt, um einen sehr empfindlichen Kunststoff, der bisher meist mit Lösungen auf wässriger Basis gereinigt wird. Verunreinigungen, die nicht durch diese Lösungen entfernt werden können, sind nur auf mechanischem Wege zu beseitigen.

Aufgabe der vorliegenden Erfindung ist es daher, eine Möglichkeit bereitzustellen, durch die Klebstoffe, insbesondere Cyanacrylatklebstoffe einfach und von einer großen Anzahl von Materialien abgelöst werden können, und die eine breite Masse von Anwendern nutzen kann. Weiterhin ist es Aufgabe der vorliegenden Erfindung, eine Möglichkeit bereitzustellen, durch die der empfindliche Kunststoff Acrylglas insbesondere vor einem Klebevorgang von einer großen Anzahl von verunreinigenden Substanzen wie auch von Klebstoffen, beispielsweise Cyanacrylatklebstoff, befreit werden kann.

Diese Aufgabe wird gelöst durch die Merkmale des Patentanspruchs 1, durch die Merkmale des Patentanspruchs 12 und durch die Merkmale des Patentanspruchs 13.

Die Unteransprüche betreffen besonders zweckmäßige Weiterbildungen der Erfindung.

Als eine erste erfindungsgemäße Lösung der Aufgabe wird die Verwendung von N-Methyl-2-pyrrolidon als Lösungsmittel eines Klebstoffs vorgeschlagen. Der Klebstoff kann ein Cyanacrylatklebstoff sein.

Überraschender Weise zeigte sich, daß Klebstoffe, insbesondere die bisher als nahezu unlöslich angesehenen Cyanacrylatklebstoffe, durch N-Methyl-2-pyrrolidon (im folgenden kurz NMP genannt) lösbar sind und daß gleichzeitig ein weit verbreiteter, aber äußerst empfindlicher Kunststoff wie Acrylglas beständig gegen NMP ist.

NMP ist ein bereits bekannter Stoff, der bisher beispielsweise zur Gewinnung von Butadien, Acetylen und hochwertigen Schmierölen, zur Extraktion von Aromaten aus Reformat- und Pyrolysebenzin oder zur Herstellung von technischen Kunststoffen wie aromatischen Polyimiden und Polyphenylsulfiden verwendet wird. Die neu entdeckten Verwendungsmöglichkeiten von NMP sind eine große Bereicherung für die verarbeitende Industrie wie auch für den privaten Verbraucher. Dies liegt letztendlich auch an den für diese Verwendung optimalen Eigenschaften des NMP. NMP ist nämlich wasserlöslich und fettlösend, frostsicher bis -24°C und sowohl leicht als auch vollständig biologisch abbaubar. Es besitzt einen niedrigen Dampfdruck, ist halogenfrei und wirkungsstabil über Jahre hinweg. NMP ist außerdem farblos und hat nur einen schwachen Eigengeruch. Es ist keiner Gefahrenklasse nach VbF zugeordnet und kein Gefahrengut im Sinne der Transportvorschriften. Tierversuche haben ergeben, daß NMP weder embryotoxisch noch mutagen wirkt. Beim Menschen wurden Hautreizungen erst nach einer mehrstündigen dermalen Exposition beobachtet. Diese Eigenschaften gewährleisten eine leichte und einfache Handhabung. NMP ist aufgrund der aufgeführten Eigenschaften eindeutig dem bisher zur Ablösung von Cyanacrylatklebstoff verwendeten Aceton vorzuziehen.

Besonders vorteilhaft ist die Verwendung des NMP zur Ablösung des Klebstoffs von einer Oberfläche eines Kunststoffs, wobei der Kunststoff insbesondere Polymethylmethacrylat oder Polyethylen oder Polypropylen oder Polyamid oder Polyvinylidenfluorid oder Perfluoralkoxy-Copolymer oder Polytetrafluorethylen oder Ethylenpropylendienmonomer oder Nitrilbutadienrubber oder Chlorsulfoniertes Monomer oder Calrez oder Viton sein kann. Durch NMP kann der Klebstoff nach einer äußerst kurzen Einwirkzeit folglich von einer Vielzahl von Kunststoffen, die teilweise als besonders empfindlich bekannt sind, rückstandsfrei abgelöst werden. Sogar ein mehrmaliges Ablösen ist ohne Zerstörung der empfindlichen Kunststoffe, wie beispielsweise Poymethylmethacrylat, möglich.

Dabei kann der Kunststoff auch als Faser, insbesondere als Nylonfaser, ausgebildet sein.

Bei einer weiteren vorteilhaften Verwendung ist vorgesehen, daß NMP zur Ablösung des Klebstoffs von pflanzlichen oder tierischen verwendbar ist. Bisher nicht zu reinigende, mit Cyanacrylatklebstoff verschmutzte Textilien, können auf diese Art und Weise gesäubert werden, ohne die Textilien zu beschädigen.

Weiterhin vorteilhaft ist auch die Verwendung von NMP zur Ablösung des Klebstoffs von kontaminierter Haut. Dies ist insbesondere bei der Verwendung von Cyanacrylatklebstoff von enormer Bedeutung. Chirurgische Eingriffe aufgrund verklebter Hautteile können auf diese Art und Weise verhindert werden. Selbstverständlich müssen bei der Berührung mit der Haut gewisse Sicherheitsvorschriften beachtet werden, da NMP bei längerer dermaler Exposition reizend wirken kann.

Weiterhin kann NMP in vorteilhafter Weise zur Ablösung des Klebstoffs von einer Oberfläche eines Metalls verwendbar sein.

Weiterhin kann NMP zur Ablösung des Klebstoffs von einer Glasoberfläche verwendbar sein. Es kann außerdem zur Ablösung des Klebstoffs von einer Keramik- oder einer Steinoberfläche verwendbar sein.

Bei einer weiteren vorteilhaften Verwendung ist vorgesehen, daß NMP zur Reinigung, insbesondere zur Entfettung einer Polymethylmethacrylatoberfläche verwendbar ist. Diese Reinigung kann beispielsweise vor einer Auftragung des Klebstoffs auf die Polymethylmethacrylatoberfläche erfolgen. Ein Verbraucher benötigt folglich bei der Verklebung von Polymethylmethacrylatoberflächen ausschließlich NMP, den entsprechenden Klebstoff und Wasser. Die Oberflächen können zunächst mit NMP gereinigt und entfettet werden, was eine unbedingte Voraussetzung für eine erfolgreiche Verklebung darstellt. Danach werden die Oberflächen mit Wasser gereinigt und getrocknet und schließlich verklebt. Nach dem Klebevorgang können unerwünschter Weise mit Klebstoff verunreinigte Stellen durch NMP gereinigt werden.

Als eine zweite erfindungsgemäße Lösung der Aufgabe ist eine Verwendung von N-Methyl-2-pyrrolidon zur Reinigung, insbesondere zur Entfettung, einer Polymethylmethacrylatoberfläche vorgesehen. Besonders die überraschend festgestellte Beständigkeit von Acrylglas gegen NMP eröffnet eine Vielzahl von neuen, wirtschaftlich äußerst interessanten Anwendungsmöglichkeiten.

Als eine dritte erfindungsgemäße Lösung der Aufgabe ist ein Klebeset vorgesehen, das einen ersten verschließbaren Behälter aufweist, der einen Klebstoff enthält, und das einen zweiten verschließbaren Behälter aufweist, der N-Methyl-2-pyrrolidon enthält. Ein solches Klebeset ist besonders für private Haushalte zweckmäßig, da mit dem Klebstoff gleichzeitig ein exzellentes Reinigungsmittel für die zu verklebenden Oberflächen und ein Mittel zur Entfernung überschüssigen Klebstoffs zur Verfügung gestellt wird.

Eine vorteilhafte Weiterbildung der Erfindung sieht vor, daß der Klebstoff in dem ersten verschließbaren Behälter ein Cyanacrylatklebstoff ist. Aufgrund seiner äußerst schnellen und starken Klebekraft führt besonders dieser Klebstoff bei zahlreichen Anwendern zu ungewollten Verklebungen, so daß der Vertrieb eines Klebesets, das gerade diesen Klebstoff enthält, besonders sinnvoll erscheint.

Besonders vorteilhaft ist weiterhin, daß der erste und der zweite verschließbare Behälter einstückig ausgebildet sein können. Auf diese Weise ist bei der Durchführung eines Klebevorgangs stets auch NMP zur Reinigung und Lösung des Klebstoffs greifbar.

Weitere Vorteile gehen aus den im folgenden aufgeführten Untersuchungsergebnissen und den beschriebenen Ausführungsformen der Erfindung hervor.

In einer ersten Untersuchung wurde die Beständigkeit von Materialien gegenüber NMP geprüft. Dabei zeigten Glas, sämtliche im Handel erhältlichen Metalle sowie Keramik, Steingut, Mineralsteine, Kunststeine, pflanzliche und tierische Fasern sowie synthetische Fasern wie beispielsweise Nylonfasern eine uneingeschränkte Beständigkeit gegenüber NMP. Leider ist es nicht möglich, alle bekannten Materialien auf ihre Beständigkeit gegenüber NMP hin zu überprüfen. Die aufgeführten Materialien stellen daher nur einen Teil der gegen NMP beständigen Materialien dar. Leder, lackierte Holzoberflächen, Farben und Papier wiesen eine Unbeständigkeit gegenüber NMP auf. In der nachfolgenden Tabelle 1 ist die Beständigkeit der im Handel gängigsten Kunststoffe gegenüber NMP aufgelistet. Die Kontaminationszeit der Oberflächenbenetzung betrug bei allen geprüften Kunststoffen 10 Minuten. Dies ist etwa das zehnfache der Zeit, die zum Ablösen von polymeren Cyanacrylaten benötigt wird. Gleichzeitig sind in der Tabelle 1 die Temperaturwerte aufgeführt, bis zu denen die Beständigkeit gegenüber NMP gewährleistet werden kann. Nitrilbutadienrubber, Chlorsulfoniertes Monomer und Viton sind nur für die Ablösezeit von etwa einer Minute gegen NMP beständig. Polyvinylchlorid und Polycarbonat sind hingegen gegen NMP unbeständig. Ein besonders vorteilhaftes Ergebnis zeigte sich speziell bei dem empfindlichen klaren Plexiglas, das keinerlei Trübung oder Verfärbung nach dem Ablösevorgang zeigte. Aufgrund der nahezu unüberschaubaren Anzahl von Kunststoffen ist es nicht möglich, alle Kunststoffe auf die Beständigkeit gegen NMP hin zu untersuchen. Die in Tabelle 1 aufgelisteten Kunststoffe mit positiven Testergebnissen stellen daher nur einen kleinen Teil der gegen NMP beständigen Kunststoffe dar.

**Tabelle 1:**

| Beständigkeit häufig verwendeter Kunststoffe gegen NMP. Das Zeichen * bedeutet, daß der Kunststoff bereits bei Raumtemperatur (RT) nur für die Ablösezeit von etwa einer Minute beständig ist. | |
|---|---|
| **Beständigkeit gegenüber NMP** | **Kunststoffbezeichnung** |
| - | Polyvinylchlorid (PVC/Hart) |
| Bis 60°C | Polyethylen (PE/Hart) |
| Bis 60°C | Polypropylen-Hochdruck (PP-H) |
| Bis 40°C | Polyamid (PA) |
| - | Polycarbonat (PC) |
| Bis 30°C | Polymethylmethacrylat (PMMA/Klar) |
| Bis 30°C | Polymethylmethacrylat (PMMA/Milchig) |
| Bis 40°C | Polyvinylidenfluorid (PVDF) |
| Bis 150°C | Perlflouralkoxy-Copolymer (PFA) |
| Bis 150°C | Polytetrafluorethylen (PTFE) |
| Bis 40°C | Ethylenpropylendienmonomer (EPDM) |
| ^{*}Bis RT | Nitrilbutadienrubber (NBR) |
| ^{*}Bis RT | Chlorsulfoniertes Monomer (CSM) |
| 25°C | Calrez (FFKM) |
| ^{*}Bis RT | Viton (FKM) |

In einer zweiten Untersuchung wurde die Ablösezeit von Cyanacrylatpolymeren von unterschiedlichsten Materialien getestet. Es wurde jeweils ein großer Tropfen Cyanacrylatklebstoff auf ein Objekt aus einem der in der nachfolgenden Tabelle 2 aufgeführten Materialien aufgetropft und 24 Stunden bei Raumtemperatur vollständig auspolymerisiert. Anschließend wurde der Tropfen mit einem mit NMP getränkten Baumwolltuch bei leicht kreisenden Bewegungen ohne große Druckausübung bearbeitet. Die benötigten Ablösezeiten bis zum vollständigen Ablösen sind in der Tabelle 2 aufgeführt. Außer den in der Tabelle 2 aufgeführten Materialien, wurden die in der Tabelle 1 aufgelisteten Kunststoffe getestet. Wie bereits oben erwähnt, betrug hier die Ablösezeit jeweils höchstens eine Minute. Dabei kann die Zeit je nach Schichtstärke des aufgetragenen Cyanacrylatklebstoffes variieren.

**Tabelle 2:**

| Ablösezeit von Cyanacrylatpolymeren von unterschiedlichen Materialien. | |
|---|---|
| **Prüfmaterial** | **Ablösezeit (sek)** |
| Mineralglas | 30 |
| Milchglas | 41 |
| Stahlplatte | 27 |
| Eisenplatte, rauh | 43 |
| Aluminiumplatte | 27 |
| Kiefernholz, natur, gehobelt | 125 |
| Kiefernholz, natur, fein geschliffen | 68 |
| Eichenholz, natur, fein geschliffen | 46 |
| Sandstein | 146 |
| Granit, poliert | 28 |
| Granit, gebrochen | 67 |
| Marmor, poliert | 32 |
| Marmor gebrochen | 76 |
| Porzellan, gebrannt, lasiert | 33 |
| Steingut, gebrannt, lasiert | 35 |
| Email | 28 |
| Ton, gebrannt, lasiert | 37 |

Von organischen Gewebe, insbesondere kontaminierter Haut, ließ sich Cyanacrylatklebstoff innerhalb von Zeiträumen bis zu einer Minute ablösen. In der gleichen Zeit konnte durch NMP Klebstoff von den Oberflächen von Fingernägeln abgelöst werden.

Das Herauslösen der Cyanacrylatpolymere aus pflanzlichen, tierischen und synthetischen Fasern wurde untersucht, indem je ein großer Tropfen Cyanacrylatkleber auf Gewebeproben aus weißer Baumwolle, Leinen, Schafwolle und Nylon aufgetragen wurde und 4 Stunden bei Zimmertemperatur aushärten konnte. Die mit Kleber benetzten Stoffe wurden jeweils mit NMP getränkt und ca. 15 Stunden bei Zimmertemperatur unter Verdampfungsausschluß liegen gelassen. Nach dieser Zeit wurden die Stoffteile zusammen mit jeweils einem unbehandelten, jedoch mit Klebstoff benetzten Stoffteil aus dem gleichen Material einer normalen Maschinenwäsche bei 30°C-60°C, je nach Material, unterzogen und getrocknet. Bei allen mit NMP behandelten Gewebearten, waren anschließend keine Klebstoffreste mehr festzustellen. Außerdem zeigten die Gewebearten keinerlei Beschädigungen oder Veränderungen gegenüber den unbehandeltem Gewebeproben. Frisch mit Cyanacrylatklebstoff kontaminierte Gewebeproben konnten durch sofortige Behandlung mit NMP in weniger als 180 Minuten gereinigt werden.

In einer dritten Untersuchung wurde der Lösevorgang in Abhängigkeit der Temperatur untersucht. Zwei ringförmige Metallkörper mit einer planaren und glatten Oberfläche von 150 mm² wurden mit Cyanacrylatklebstoff fest miteinander verklebt. Nach dem Verkleben wurden die Körper 2 Stunden bei 80°C in einem Wärmeschrank inkubiert, um eine vollständige Polymerisation des Cyanacrylatklebstoffs zu gewährleisten. Die Metallkörper wurden anschließend vollständig in ein thermostatisiertes und gerührtes NMP-Bad eingetaucht. Die Metallkörper blieben bei unterschiedlicher Temperatur solange in dem NMP-Bad, bis sie sich ohne größere Kraftanstrengung voneinander lösen ließen. Dabei ergaben sich die in der Tabelle 3 aufgeführten Abhängigkeiten der Badtemperatur und der Lösezeit in Minuten.

**Tabelle 3:**

| Lösevorgang von vollständig polymerisiertem Cyanacrylatklebstoff durch NMP in Abhängigkeit von der Temperatur. | |
|---|---|
| **Badtemperatur (°C)** | **Lösezeit (min)** |
| 20 | 600 |
| 40 | 240 |
| 60 | 75 |
| 80 | 30 |
| 100 | 13 |
| 120 | 5 |

In einer vierten Untersuchung wurde die Löslichkeitsmenge von Cyanacrylatpolymeren in NMP getestet. Jeweils 25 Gew% Cyanacrylatpolymere konnten bei Zimmertemperatur in NMP gelöst werden. Bei dem Lösevorgang erhöhte sich die Viskosität der Lösung.

In einer fünften Untersuchung wurde die Verwendung von NMP als Reinigungs- und Entfettungsmittel getestet. NMP erwies sich als hervorragendes Lösungsmittel für eine Vielzahl von Farben und Lacken. Auch tierische und pflanzliche Öle und Fette ließen sich durch NMP exzellent entfernen. Bei synthetischen Ölen, wie alkylierten (M, N) Kohlenwasserstoffen bzw. aralkylierten (M, L, S) Kohlenwasserstoffen, getestet am Beispiel von Marlothermöl, ist eine gute Löslichkeit zu beobachten. Dies ist insbesondere bei der Verwendung von NMP als Reinigungsmittel von Acrylglas von großer Bedeutung.

In einer weiteren Untersuchung wurde geprüft, welche Klebstoffe ebenfalls ablösbar sind. Es wurde jeweils ein Tropfen des jeweils zu prüfenden Klebstoffs auf Mineralglas aufgetragen. Bei dem ebenfalls untersuchten Zweikomponentenklebstoff wurden beide Komponenten vermischt und auf Mineralglas aufgetragen. Nachdem der Klebstoff vollständig ausgehärtet war, wurde der Ablösevorgang mit NMP eingeleitet. Dabei ergab sich, das die üblicherweise im Handel erhältlichen Klebstoffe, wie beispielsweise Alleskleber ("UHU"), Kontaktkleber ("Pattex") , Papierkleber ("Pritt") und sogar Zweikomponentenkleber von dem Mineralglas rückstandsfrei abgelöst werden konnten. Die Ablösung des Zweikomponentenklebers erfolgte bei 40°C-60°C.

Die beschriebenen Untersuchungsergebnisse dokumentieren abermals die besonderen Qualitäten des NMP im Hinblick auf die hier beschriebenen neuen Verwendungsmöglichkeiten.

Im folgenden sollen nun zwei mögliche Ausführungsformen des erfindungsgemäßen Klebesets beschrieben werden.

In einer ersten Ausführungsform besteht ein Klebeset aus einer Schachtel, die eine mit Cyanacrylatklebstoff gefüllte Kunststoffflasche enthält und weiterhin ein Kunststoffgefäß, in dem sich NMP befindet.

In einer zweiten Ausführungsform ist ein Kombibehälter aus Kunststoff einerseits mit Cyanacrylatklebstoff und andererseits mit NMP gefüllt.

## Patentansprüche

1. Verwendung von N-Methyl-2-pyrrolidon als Lösungsmittel eines Klebstoffs.

2. Verwendung nach einem der vorhergehenden Ansprüche, dadurch gekennzeichnet, daß der Klebstoff ein Cyanacrylatklebstoff ist.

3. Verwendung nach einem der vorhergehenden Ansprüche, dadurch gekennzeichnet, daß N-Methyl-2-pyrrolidon zur Ablösung des Klebstoffs von einer Oberfläche eines Kunststoffs verwendbar ist, wobei der Kunststoff insbesondere Polymethylmethacrylat oder Polyethylen oder Polypropylen oder Polyamid oder Polyvinylidenfluorid oder Perfluoralkoxy-Copolymer oder Polytetrafluorethylen oder Ethylenpropylendienmonomer oder Nitrilbutadienrubber oder chlorsulfoniertes Monomer oder Calrez oder Vilton ist.

4. Verwendung nach Anspruch 3, dadurch gekennzeichnet, daß der Kunststoff als Faser, insbesondere als Nylonfaser, ausgebildet ist.

5. Verwendung nach einem der vorhergehenden Ansprüche, dadurch gekennzeichnet, daß N-Methyl-2-pyrrolidon zur Ablösung des Klebstoffs von pflanzlichen oder tierischen Fasern verwendbar ist.

6. Verwendung nach einem der vorhergehenden Ansprüche, dadurch gekennzeichnet, daß N-Methyl-2-pyrrolidon zur Ablösung des Klebstoffs von kontaminierter Haut verwendbar ist.

7. Verwendung nach einem der vorhergehenden Ansprüche, dadurch gekennzeichnet, daß N-Methyl-2-pyrrolidon zur Ablösung des Klebstoffs von einer Oberfläche eines Metalls verwendbar ist.

8. Verwendung nach einem der vorhergehenden Ansprüche, dadurch gekennzeichnet, daß N-Methyl-2-pyrrolidon zur Ablösung des Klebstoffs von einer Glasoberfläche verwendbar ist.

9. Verwendung nach einem der vorhergehenden Ansprüche, dadurch gekennzeichnet, daß N-Methyl-2-pyrrolidon zur Ablösung des Klebstoffs von einer Keramik- oder einer Steinoberfläche verwendbar ist.

10. Verwendung nach einem der vorhergehenden Anprüche, dadurch gekennzeichnet, daß N-Methyl-2-pyrrolidon zur Reinigung, insbesondere zur Entfettung, einer Polymethylmethacrylatoberfläche verwendbar ist.

11. Verwendung nach Anspruch 10, dadurch gekennzeichnet, daß die Reinigung vor einer Auftragung des Klebstoffs auf die Polymethylmethacrylatoberfläche erfolgt.

12. Verwendung von N-Methyl-2-pyrrolidon zur Reinigung, insbesondere zur Entfettung, einer Polymethylmethacrylatoberfläche.

13. Klebeset, das einen ersten verschließbaren Behälter aufweist, der einen Klebstoff enthält, und das einen zweiten verschließbaren Behälter aufweist, der N-Methyl-2-pyrrolidon enthält.

14. Klebeset nach Anspruch 13, dadurch gekennzeichnet, daß der Klebestoff in dem ersten verschließbaren Behälter ein Cyanacrylatklebstoff ist.

15. Klebeset nach einem der Ansprüche 13 oder 14, dadurch gekennzeichnet, daß der erste und der zweite verschließbare Behälter einstückig ausgebildet sind.
